# EUROPEAN PATENT SPECIFICATION

(11) **EP 2 714 762 B1**
(45) Date of publication and mention of the grant of the patent: **01.04.2015**
(21) Application number: 12726395.2
(22) Date of filing: 31.05.2012
(51) Int. Cl.: C08K 5/00, C08K 5/14, C08J 3/24, C08G 18/67, C08G 18/76, C08G 18/81, C08G 18/32

(54) **RESIN COMPOSITION**
HARZZUSAMMENSETZUNG
COMPOSITION DE RÉSINE

(30) Priority: 01.06.2011 EP 11168469
(43) Date of publication of application: 09.04.2014
(73) Proprietor: DSM IP Assets B.V., 6411 TE Heerlen (NL)
(72) Inventor: HAVEMAN, Daniel, NL-8022 AW Zwolle (NL); RAIMANN, Daniel, NL-6100 AA Echt (NL); JANSEN, Johan, Franz, Gradus, Antonius, NL-6100 AA Echt (NL)
(74) Representative: Verhaegen, Ilse Maria M.
(86) International application number: PCT/EP2012/060247
(87) International publication number: WO 2012/164020

(56) References cited:
- EP-A1- 0 148 400
- EP-A1- 1 564 254
- US-A- 3 669 991

## Description

The present invention relates to a thermosetting resin composition comprising an unsaturated polyester resin and/or a methacrylate functional resin. Such resin composition are known in the art and can for example be cured using a peranhydride (such as benzoyl peroxide) as radical initiator and a tertiary aromatic amine (such as for example diethylaniline) as accelerator for the radical initiation. Peranhydride/tertiary aromatic amine systems are in particular used to cure resins with low acid values.

A recognized problem in the art is that, when using a peranhydride and tertiary aromatic amine for curing in particular methacrylate functional resin compositions in the presence of air, the surface of the cured object often remains tacky or even wet (uncured). This insufficient surface cure is generally allocated to oxygen inhibition. Also for unsaturated polyester resins, the insufficient surface cure of cured objects, obtained upon curing in the presence of air and using a peranhydride and tertiary aromatic amine, remains a problem.

The object of the present invention is therefore to improve the surface cure of a cured object obtained by peranhydride/ tertiary aromatic amine curing of a thermosetting resin composition comprising an unsaturated polyester resin and/or a methacrylate functional resin in the presence of air.

This object has surprisingly been achieved in that the resin composition further comprises, as compound (b), an aromatic amine according to formula 1 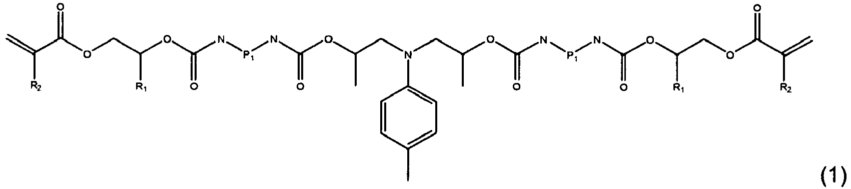 in which P₁ is an organic residue, which can be monomeric, oligomeric or polymeric; R₁ =H or a C₁-C₆ alkyl, R₂= H or CH₃.

It has surprisingly been found that an improved surface cure can be obtained when effecting the peranhydride initiated curing of the resin composition in the presence of N,N-di-isopropanol toluidine as tertiary aromatic amine that has been incorporated at the oxygen atoms into an organic residue via an urethane bond.

An additional advantage is that with the thermosetting resin compositions according to the invention efficient peranhydride initiated curing can be obtained under several environmental conditions, including low temperature (at temperature of 0 °C or lower) conditions and/or curing in the presence of water.

Thermosetting resin compositions harden by chemical reaction, often generating heat when they are formed, and cannot be melted or readily re-formed once hardened. The resin compositions are liquids at normal temperatures and pressures, so can be used to impregnate reinforcements, for instance fibrous reinforcements, especially glass fibers, and/or fillers may be present in the resin composition, but, when treated with suitable radical forming initiators, the various unsaturated components of the resin composition crosslink with each other via a free radical copolymerization mechanism to produce a hard, thermoset plastic mass (also referred to as structural part).

The molecular weight Mₙ of the aromatic amine according to formula (1) is preferably higher than 750 Dalton, more preferably higher than 800 Dalton and even more preferably higher than 850 Dalton. The molecular weight Mₙ of the aromatic amine according to formula (1) is preferably lower than 10000 Dalton, more preferably lower than 5000 Dalton and even more preferably lower than 3000 Dalton. As used herein, the molecular weight of the aromatic amine according to formula (1) is determined in tetrahydrofuran using gel permeation chromatography according to ISO 13885-1 using polystyrene standards. In a preferred embodiment, the molecular weight Mₙ of the aromatic amine according to formula (1) is preferably higher than 750 Dalton and lower than 10000 Dalton. In a more preferred embodiment, the molecular weight Mₙ of the aromatic amine according to formula (1) is preferably higher than 800 Dalton and lower than 5000 Dalton. In a preferred embodiment, the molecular weight Mₙ of the aromatic amine according to formula (1) is preferably higher than 850 Dalton and lower than 5000 Dalton.

Preferably, P₁ is a residue of an aromatic or aliphatic di- and/or tri-isocyanate or of a polymeric di- or tri-isocyanate or mixtures thereof. More preferably, P₁ is a residue of a polymeric di- or tri-isocyanate or mixtures thereof such as polymeric methylene diphenyl diisocyanate . More preferably, R₁= CH₃, R₂= CH₃ and P₁ is a residue of polymeric methylene diphenyl diisocyanate. In this preferred embodiment, the molecular weight Mₙ of the aromatic amine according to formula (1) is preferably higher than 850 Dalton; and preferably lower than 10000 Dalton, more preferably lower than 5000 Dalton and even more preferably lower than 3000 Dalton.

Non limited examples of aromatic, aliphatic and polymeric di and/or tri- isocyanates are toluene diisocyanate (TDI), 4,4'-methylene diphenyl diisocyanate (MDI), hexanediisocyanate (HDI), isopherone diisocyanate (IPDI) TDI trimers, HDI trimers, and polymeric MDI (pMDI) Preferred di and/or tri- isocyanates are toluene diisocyanate (TDI), 4,4'-methylene diphenyl diisocyanate (MDI), hexanediisocyanate (HDI), isopherone diisocyanate (IPDI) TDI trimers, HDI trimers, and polymeric MDI (pMDI). Especially MDI and polymeric MDI are preferred isocyanates. The polymeric diisocyanates can also be prepared via the addition of two equivalents diisocyanates to an oligomeric or polymeric diol such as for example polyethylene oxide, polypropylene oxide, polytetrahydrofurane, ethoxylated bisphenol-A, propoxylated bisphenol-A, ethyleneoxide propyleneoxide blockcopolymers and mixtures thereof.

More preferably, all the aromatic amine present in the resin composition is according to formula (1).

The thermosetting resin composition according to the invention comprises, as compound (a), a radical copolymerizable resin selected from the group consisting of unsaturated polyester resins, methacrylate functional resins and any mixture thereof. Preferably, the resin composition according to the invention comprises at least one methacrylate functional resin as radical copolymerizable resin (a).

In an embodiment of the invention, the radical copolymerizable resin (a) of the thermosetting resin composition according to the invention is an unsaturated polyester resin or a mixture of unsaturated polyester resins. In another embodiment of the invention, the radical copolymerizable resin (a) of the thermosetting resin composition according to the invention is a mixture of at least one unsaturated polyester resin and at least one methacrylate functional resin. In still another and preferred embodiment of the invention, the radical copolymerizable resin (a) of the thermosetting resin composition according to the invention is a methacrylate functional resin or a mixture of methacrylate functional resins.

The unsaturated polyester resin refers to a thermosetting polymer prepared by the polycondensation of at least one or more diacids and diols and which polymer contains ethylenically unsaturated carbons. The unsaturation, typically, is introduced into the polyester by condensation with unsaturated diacids, such as for example maleic (typically used as the anhydride) or fumaric acids. Examples of suitable unsaturated polyester resins can be found in a review article of M. Malik et al. in J.M.S. - Rev. Macromol. Chem. Phys., C40 (2&3), p.139-165 (2000). The authors describe a classification of such resins - on the basis of their structure - in five groups:
(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A.
(2) Iso-resins: these are prepared from isophthalic acid, maleic anhydride or fumaric acid, and glycols.
(3) Bisphenol-A-fumarates: these are based on ethoxylated bisphenol-A and fumaric acid.
(4) Chlorendics: are resins prepared from chlorine/bromine containing anhydrides or phenols in the preparation of the UP resins.

The unsaturated polyester resin preferably comprises fumarate building blocks. The molecular weight Mₙ of the unsaturated polyester resin is preferably in the range of from 500 to 200000 Dalton, preferably from 750 to 5000 and more preferably from 1000 to 3000 Dalton. As used herein, the molecular weight of the unsaturated polyester resin is determined in tetrahydrofuran using gel permeation chromatography according to ISO 13885-1 using polystyrene standards.

A methacrylate functional resin contains at least one methacrylate functional end group. As used herein, the methacrylate functional resin is not a methacrylate functional aromatic amine according to formula (1). The composition preferably comprises methacrylate functional resins with a number-average molecular weight Mₙ of at least 450 Dalton. As used herein, the number-average molecular weight (Mₙ) is determined in tetrahydrofuran using gel permeation chromatography according to ISO 13885-1 employing polystyrene standards. Preferably, the methacrylate functional resin has a number-average molecular weight Mₙ of at most 10000 Dalton.

Preferably, at least part of the methacrylate functional resins present in the composition has a methacrylate functionality of at least 2. As used herein, methacrylate functionality is defined as the number of CH₂=CMeCOO- per molecule of methacrylate functional resin. In a preferred embodiment, the composition comprises a mixture of methacrylate functional resins which mixture has an average methacrylate functionality higher than 1, preferably higher than 1.5 and more preferably higher than 1.7. The upper limit of the average functionality is not critical. Preferably the average functionality is lower than 4, more preferably lower than 3.

According to one embodiment, the methacrylate functional resin further contains at least one ether group, at least one hydroxyl group and/or at least one urethane group. In one preferred embodiment, the methacrylate functional resin further contains an ether group. A preferred methacrylate functional resin further containing an ether group is an alkoxylated bisphenol A dimethacrylate.

In another preferred embodiment, the methacrylate functional resin further contains an ether group and a hydroxyl group. A methacrylate functional resin further containing an ether group and a hydroxyl group is preferably obtained by reaction of an epoxy oligomer or polymer with methacrylic acid or methacrylamide, preferably with methacrylic acid. A preferred methacrylate functional resin further containing an ether group and a hydroxyl group is a bisphenol A glycerolate dimethacrylate.

In still another preferred embodiment, the methacrylate functional resin further contains an urethane group. A methacrylate functional resin further containing an urethane group is preferably obtained by reaction of a hydroxyl functional methacrylate with an isocyanate (also referred to as urethane methacrylate functional resin). Preferably, the resin composition comprises, as compound (a), a methacrylate functional resin according to formula (2) or a mixture of methacrylate functional resins according to formula (2) 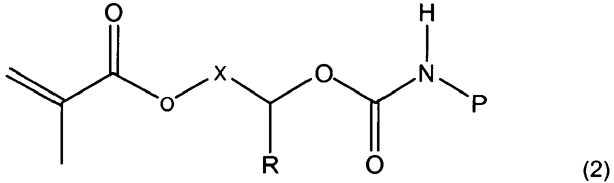 in which X= C1-C10 (cyclo)alkyl or C1-C30 alkoxy; R = H or a C1- C4 alkyl and P = a residue of an isocyanate. Preferably, X= CH₂ and R = H or CH₃. Preferably, P is a residue of an aromatic or aliphatic di- and/or tri- isocyanate or of a polymeric di- or tri-isocyanate or mixtures thereof. More preferably, P is a residue of a polymeric di- or tri-isocyanate or mixtures thereof such as polymeric methylene diphenyl diisocyanate . More preferably, P is a residue of polymeric methylene diphenyl diisocyanate.

The resin composition preferably has an acid value in the range of from 0.01 to 100 mg KOH/g of resin composition, preferably in the range from 0.05 to 70 mg KOH/g of resin composition. In case the resin composition comprises an unsaturated polyester resin, the resin composition preferably has an acid value in the range of from 1 to 20 mg KOH/g of resin composition or alternatively in the range of from 30 to 50 mg KOH/g of resin composition. As used herein, the acid value of the resin composition is determined titrimetrically according to ISO 2114-2000. In case the resin composition comprises a methacrylate functional resin, the acid value of the resin composition is preferably from 0 to 10 mg KOH/g of resin composition.

The resin composition preferably further comprises, as compound (c), reactive diluent. For clarity purpose, a reactive diluent is a diluent for compound (a), i.e. lowers the viscosity of compound (a), and is able to copolymerize with compound (a). Ethylenically unsaturated compounds can be advantageously used as reactive diluent such as styrene, α-methylstyrene, 4-methylstyrene, (meth)acrylates, vinyl ethers, a vinyl esters, vinyl amines or vinyl amides or a mixture of at least two of these compounds. Preferably, styrene and/or methacrylates are used as reactive diluent. Suitable examples of (meth)acrylate reactive diluents are hydroxyl ethyl (meth)acrylate, hydroxyl propyl (meth)acrylate, butyl (meth)acrylate, hexyl (meth)acrylate and cyclohexyl (meth)acrylate, phenoxyethyl (meth)acrylate, tetrahydro furfuryl (meth)acrylate, allyl (meth)acrylate, PEG200 di(meth)acrylate, 1,4-butanediol di(meth)acrylate, 1,3-butanediol di(meth)acrylate, 2,3-butanedioldi(meth)acrylate, 1,6-hexanediol di(meth)acrylate and its isomers, diethyleneglycol di(meth)acrylate, triethyleneglycol di(meth)acrylate, glycerol di(meth)acrylate, trimethylolpropane di(meth)acrylate, trimethylolpropane tri(meth)acrylate neopentyl glycol di(meth)acrylate, dipropyleneglycol di(meth)acrylate, tripropyleneglycol di(meth)acrylate, PPG250 di(meth)acrylate, tricyclodecane dimethylol di(meth)acrylate, 1,10-decanediol di(meth)acrylate and/or tetraethylene glycol dimethacrylate. Preferred methacrylate reactive diluents are hydroxyl ethyl (meth)acrylate, hydroxyl propyl (meth)acrylate 1,4-butanediol di(meth)acrylate, neopentylglycol di(meth)acrylate, PEG200 di(meth)acrylate, triethyleneglycol di(meth)acrylate and/or tripropylene glycol di(meth)acrylate. In case the resin composition comprises methacrylate functional resin(s), the reactive diluent is preferably a methacrylate.

The amount of the aromatic amine according to formula (1) (relative to the total amount of compounds (a), (b) and (c)) is preferably from 1 up to and including 30 wt.%, more preferably from 2 up to and including 20 wt.%.

In one preferred embodiment of the invention, the total amount of unsaturated polyester resins and methacrylate functional resins (denoted as compound (a)) in the resin composition is from 1 up to and including 99 wt.%; the amount of aromatic amines according to formula (1) (denoted as compound (b)) in the resin composition is from 1 up to and including 30 wt.%; and the amount of reactive diluent (denoted as compound (c)) in the resin composition is from 0 up to including 70 wt.%, preferably from 15 up to and including 70 wt.%. In another and more preferred embodiment of the invention, the total amount of unsaturated polyester resins and methacrylate functional resins (denoted as compound (a)) in the resin composition is from 20 up to and including 98 wt.%; the amount of aromatic amines according to formula (1) (denoted as compound (b)) in the resin composition is from 2 up to and including 20 wt.%; and the amount of reactive diluent (denoted as compound (c)) in the resin composition is from 0 up to including 60 wt.%, preferably from 20 up to and including 60 wt.%. As used herein, the amount of compounds (a), (b) and (c) are given relative to the total amount of compounds (a), (b) and (c).

The resin composition preferably further comprises a radical inhibitor. These radical inhibitors are preferably chosen from the group of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Advantageously, the amount of radical inhibitor in the resin composition according to the invention is in the range of from 0.0001 to 10 % by weight. More preferably, the amount of radical inhibitor in the resin composition is in the range of from 0.001 to 1 % by weight. The amount of radical inhibitor in the resin composition is given relative to the total amount of compounds (a), (b) and (c). The skilled man quite easily can assess, in dependence of the type of inhibitor selected, which amount thereof leads to good results according to the invention.

Preferably, the resin composition according to the invention comprises a stable oxyl radical selected from the group of stable oxyl radicals according to formula (4) 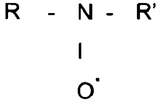 in which R and R' are the same or different C₁-C₂₀ alkyl or C₇-C₂₀ alkylaryl.

In a preferred embodiment, the resin composition according to the invention further comprise (in)organic filler (compound (d)). The amount of (in)organic filler relative to the total amount of filled resin composition ( = total amount of compounds (a), (b), (c) and (d) and any other compound present in the resin composition) is preferably from 10 to 90 wt.%. Suitable fillers are aluminium trihydrate, calcium carbonate, mica, glass, microcrystalline silica, quartz, barite and/or talc. These fillers may be present in the form of sands, flours or molded objects, especially in the form of fibers or spheres. Suitable fillers are also glass fibres and carbon fibres.

The present invention further relates to a process for radically curing, in the presence of air, a resin composition according to the invention whereby the curing is effected in the presence of a peranhydride.

A very suitable example of an aromatic peranhydride is dibenzoyl peroxide. A very suitable example of an alipahtic peranhydride is dilauroyl peroxide. The amount of the peranhydride relative to the total amount of resin composition ( = total amount of compounds (a), (b) and any other compound present in the resin composition) is from 0.01 up to and including 30 wt.%, more preferably from 0.05 up to and including 20 wt.% and even more preferably from 0.1 up to and including 15 wt.%. Preferably, the molar amount of peranhydride relative to the molar amount of aromatic amine according to formula (1) is preferably from 0.1 up to and including 10, more preferably from 0.2 up to and including 5. The curing is effected preferably at a temperature in the range of from -20 to +150 °C, more preferably in the range of from -20 to +100 °C, even more preferably at ambient temperature, which may range from -20 to + 40 °C.

The present invention further relates to a two-component system consisting of a first component A and a second component B, whereby component A comprises a resin composition as described above and component B comprises a peranhydride as described above. Preferred compounds of component A and component B of the two-component system as well as the amounts are as described above. The system may further comprise additional compounds in amounts as described above.

The use of the two-component system according to the invention requires mixing of component A and component B to obtain a cured network. As used herein, two-component systems means a system with two spatially separated components whereby the peranhydride is present in one component that does not comprise radical copolymerizable compounds in order to prevent premature radical copolymerization prior to the use of the two-component system to obtain the cured network. At the moment that the radically copolymerization of the unsaturated polyester resin and/or methacrylate functional resin, at least a peranhydride is added to this composition. Preferably, said adding is done by mixing the peranhydride into the resin composition.

The present invention further relates to a cured structural part obtained by mixing the resin composition according to the invention with a peranhydride or obtained by the process according to the invention or obtained by mixing the compounds of the two-component system as described above.

The present invention further relates to the use of such a cured structural part in automotive, boats, chemical anchoring, roofing, construction, containers, relining, pipes, tanks, flooring or windmill blades. For chemical anchoring, high pull out performance at different temperatures and/or water insensitivity are critical performance parameters. The fact that the curing of the resin composition according to the invention is relative insensitive for water and/or temperature makes the resin compositions ideally suited for this application. Therefore, the present invention also relates to a method for chemical anchoring of an anchoring element, such as for example a threaded anchor rods, a reinforcing iron, a threaded sleeve and a screw, comprising (1) anchoring an anchoring element to a borehole of any kind of substrate (such as for example boreholes in concrete, bricks, natural and artificial rock) with a composition obtained by mixing the two components A and B from the two-component system according to the invention, wherein at least one of component A and B comprises at least an inorganic filler (d) as described above; and (2) allowing the composition to cure at ambient temperature (which may range from -20 °C to +40 °C), whereby the anchoring element is anchored to the surface. In a preferred embodiment, any of the components A or B or both further comprises a radical inhibitor as described above.

The present invention further relates to an aromatic amine according to formula (1) 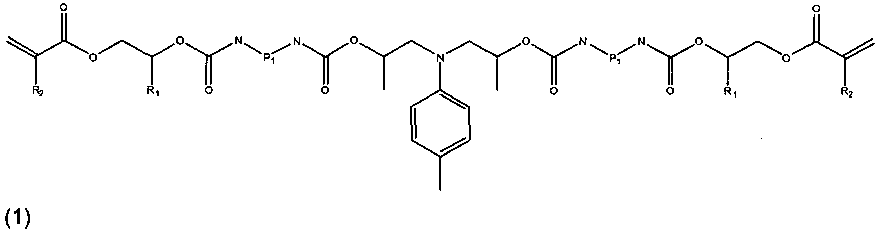 in which P₁ =an organic residue, R₁ =H or a C₁-C₆ alkyl, R₂= H or CH₃. Preferably, R₁= CH₃ and R₂= CH₃. Preferably, P₁ is a residue of an aromatic or aliphatic di- and/or tri-isocyanate or of a polymeric di- or tri-isocyanate or mixtures thereof. More preferably, P₁ is a residue of polymeric di- or tri-isocyanate or mixtures thereof such as polymeric methylene diphenyl diisocyanate or the addition product of two equivalents of diisocyanate to an oligomeric or polymeric diol. More preferably, R₁= CH₃, R₂= CH₃. and P₁ is a residue of polymeric methylene diphenyl diisocyanate. The molecular weight Mₙ of the aromatic amine according to formula (1) is preferably as described above.

The present invention further relates to a process for preparing an aromatic amine according to formula 1 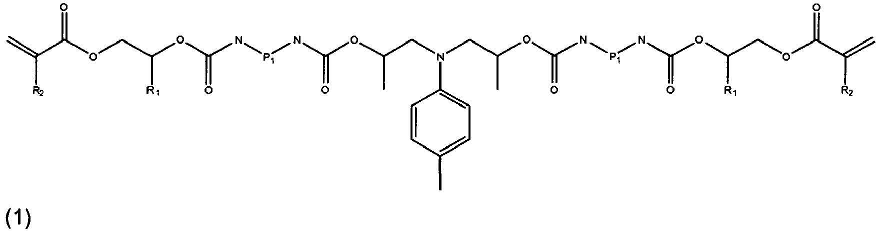 in which P₁ =an organic residue, R₁ =H or a C₁-C₆ alkyl, R₂= H or CH₃, wherein the process comprises reacting a polymeric isocyanate with a functionality of ≥2, a hydroxyfunctional (meth)acrylate and N,N-di-isopropanoltoluidine. The preparation of the aromatic amine according to formula (1) may be effected in the presence of a reaction catalyst, which may be any of those known to those skilled in the art of polyurethane production, such as for example organo stannous compounds, in particular dibutyl tin dilaurate. Another very suitable reaction catalyst is a zirconium (IV) alkoxide and/or a zirconium (IV) carboxylate.

The invention is now demonstrated by means of a series of examples and comparative examples. All examples are supportive of the scope of claims. The invention, however, is not restricted to the specific embodiments as shown in the examples.

### Measurements

### Gel time equipment

In some of the Examples and Comparative Experiments presented hereinafter, it is mentioned that curing was monitored by means of a standard gel time equipment. This is intended to mean that both the gel time (T_{gel} or T_{25->35°C}) and peak time (Tₚₑₐₖ or T_{25->peak}) were determined by exotherm measurements according to the method of DIN 16945 when curing the resin with the initiating systems as indicated in the Examples and Comparative Examples. The equipment used therefore was a Soform gel timer, with a Peakpro software package and National Instruments hardware; the waterbath and thermostat used were respectively Haake W26, and Haake DL30. At temperature below 5°C a cryostate was used instead of the waterbath and the gel time as well as the peak time were determined as T_{X->35°C} and T_{X->peak}.

In some of the Examples and Comparative Experiments presented hereinafter, it is mentioned that curing was monitored by means of a physical gel timer in which the physical gel time was determined according to ISO 9396 except that instead of the resin a mixture of 100 g resin, 150 ppm t-butyl catchol and 30 g Perkadox 20S was used and the temperature was set at -5°C instead of 120 °C in order to determine the physical gel time at low temperatures

### Molecular weight

The molecular weight is determined in tetrahydrofuran using gel permeation chromatography according to ISO 13885-1 using polystyrene standards.

### Barcol hardness

Barcol hardness was measured according to ASTM D2583 norm.

### Pull-out

### Confined test

The measurements of the fail load were performed according to ETAG 001 part 5 (version February 2008) with a M14 drill hole (14 mm diameter) and M12 anchors (class 12.9 steel, 12 mm diameter) with a setting depth of 72 mm in concrete (C20/25).

For the reference experiments, the holes were well cleaned (4 times a vacuum blowing, brushing, vacuum blowing cycle). The hole is filled with a resin composition and a steel anchor is set therein. After one day at room temperature (23°C), the anchors were pulled out.

For the F1 b experiments, the concrete was saturated with water and the holes were poorly cleaned (vacuum blowing, brushing and vacuum blowing cycle only once). The hole is filled with a resin composition and a steel anchor is set therein. After 24 hrs, whilst maintaining the concrete saturated with water, the anchors were pulled out.

For the -5°C experiments, the concrete with well cleaned holes and the steel anchors were stored in the fridge at -5°C for at least 24 hrs before filling the holes with the resin composition and setting the steel anchors at -5°C. After 24 hrs, whilst maintaining the temperature at -5°C, the anchors were pulled out.

### Preparation of resins A and B and comparative resins C-H

A reactor was charged at room temperature with x g pMDI (polymeric methylene diphenyl diisocyanate with a NCO content of 31.5 wt.%), y g hydroxyl propyl methacrylate HPMA (containing 300ppm hydroquinone monomethylether as inhibitor) and z g hydroxyl functional aromatic amine (for resin A, resin B, comp resin E and comp resin H- see Table 1). Next 160 ppm of dibutyl tin dilaurate (catalyst) was added followed by slowly heating the reaction mixture to 40 °C. The amounts are given in Table 1. After the start of the exothermic reaction the mixture was heated to 85°C and kept at this temperature till the level of free isocyanate is below 0.01% (according to IR analysis), indicating that the resin synthesis has been finished. Resins A, B and Comparative Resins C-H are obtained.

### Preparation of resin compositions containing resins A, B and comparative resins C-H

Next the reaction mixture were cooled down to room temperature, and diluted with butanediol dimethacrylate to reach a 60% solids content and 160 ppm Tempol was added.

For resin A, resin B, comp resin E and comp resin H, a hydroxyl functional aromatic amine has been added during the synthesis. For resin A and resin B, DIPT (N,N-di-isopropanoltoluidine) has been used as hydroxyl functional aromatic amine. For comp resin E, DEA (N,N-di-(2-hydroxyethyl)aniline) has been used as hydroxyl functional aromatic amine. For comp resin H, DET (N,N-di-(2-hydroxyethyl)toluidine) has been used as hydroxyl functional aromatic amine.

For comp resin C, comp resin D and comp resin G, no hydroxyl functional aromatic amine has been added during the synthesis, but a hydroxyl functional aromatic amine has been added to the resin together with the butanediol dimethacrylate (i.e. after having finished the synthesis of the resin). For comp resin C, DIPT has been used as hydroxyl functional aromatic amine. For comp resin D, DEA has been used as hydroxyl functional aromatic amine. For comp resin G, DET has been used as hydroxyl functional aromatic amine. For comp resin F, no hydroxyl functional aromatic amine has been added during the synthesis and no hydroxyl functional aromatic amine has been added to the resin after having finished the synthesis of the resin, but diethylaniline (an aromatic amine; NL-64-10P from Akzo Nobel) has been added to the resin after having finished the synthesis of the resin.

**Table 1**

| Resin | pMDI | HPMA | Mₙ of the resin | DIPT during synthesis | DEA during synthesis | DET during synthesis | DIPT after synthesis | DEA after synthesis | Diethyl aniline after synthesis | DET after synthesis |
|---|---|---|---|---|---|---|---|---|---|---|
| A | 450 | 437.4 | 890 | 37.68 | | | | | | |
| B | 450 | 388.8 | 1000 | 75.34 | | | | | | |
| Comp C | 450 | 486 | 790 | | | | 37.68 | | | |
| Comp D | 450 | 486 | 790 | | | | | 30.58 | | |
| Comp E | 450 | 437.4 | 890 | | 30.58 | | | | | |
| Comp F | 450 | 486 | 790 | | | | | | 376.8 | |
| Comp G | 450 | 486 | 790 | | | | | | | 32.95 |
| Comp H | 450 | 437.4 | 890 | | | 32.95 | | | | |

### Examples 1-2 and Comparative Experiments A-D : Curing and castings of resins

To 100 g of the resin compositions prepared as described above, to which 150 ppm t-butyl catechol is added as additional inhibitor, 30 g Perkadox 20S (a peranhydride from Akzo Nobel) was added as peroxide. After having stirred for approximately 30 seconds, 10 g of the resin composition was poured into an aluminum cup and cured at room temperature in the cup. In this way a 3 mm thick casting was obtained and the surface cure at the air interface was investigated visually, manually and with the barcol hardness in case of a tack free surface. Of 25 g of the resin composition the cure was monitored in the standard gel time equipment. For comp resins G and H 150 ppm Tempol was also added to have a workable gel time.

The results are shown in the table below.

**Table 2**

| Example | Resin present in the resin composition | T gel (min) | T peak (min) | Peak temp (°C) | Barcol after 0.5 hr | Barcol after 1 hr |
|---|---|---|---|---|---|---|
| 1 | Resin A | 3.74 | 5.02 | 164 | 10 | 15 |
| 2 | Resin B | 1.86 | 2.85 | 161 | 15 | 15 |
| Comp Ex A | Comp Resin C | 1 | 1.93 | 167 | 0 | 0 |
| Comp Ex B | Comp Resin D | 5.24 | 6.27 | 169 | Tacky | Tacky |
| Comp ExC | Comp Resin E | 38.09 | 40.5 | 162 | 0 | 0 |
| Comp Ex D | Comp Resin F | 2.70 | 3.87 | 141 | Tacky | Tacky |
| Comp ExE | Comp Resin G | 2.30 | 3.50 | 168 | Tacky | 30 |
| Comp Ex F | Comp Resin H | 3.64 | 4.80 | 166 | Tacky | Tacky |

The above examples and comparative experiments surprisingly show that in case a urethane methacrylate with built-in DIPT is present in the urethane methacrylate resin composition, a good surface cure as demonstrated with the Barcol hardness can be obtained. This is the more surprising considering the fact that with a faster reacting system (Comparative Experiment A, in which the aromatic amine is present in a monomer form) the surface cure is not good.

Comparing Example 1 with Comparative Experiment A clearly shows that only with the built-in aromatic amine according to the invention such good surface cure can be obtained. Comparing Example 1 with Comparative Experiment B, D and E shows that adding another aromatic amine than DIPT after having finished the resin synthesis also does not result in a good surface cure. Comparing example 1 with comparative experiment C, i.e. incorporating DEA instead of DIPT, or comparing example 1 with comparative F, incorporating DET instead of DIPT, shows that using another aromatic amine a good surface cure, as demonstrated by the tackiness or by the barcol hardness, cannot be obtained. By building-in DET (comparative experiment F) compared to having DET as a monomer in the resin composition (comparative experiment E), the surface cure becomes worse, i.e the surface is still tacky after 1 hour. Surprisingly, by building-in DIPT (example 1 and 2) compared to having DIPT as a monomer in the resin composition (comparative experiment A), the surface cure improves; already after 0.5 hours the surface has been cured well in example 1 and 2, while in comp experimant A the barcol hardness is only 0 even after 24 hours.

### Examples 3-10

To 100g of the resin compositions comprising resin A or B (prepared as described above) was added x g of Perkadox 20S. The curing of 25 g was monitored in the standard gel time equipment.

The results are shown below in Table 3.

**Table 3**

| | Resin present in the resin composition | % Perkadox 20S | T gel (min) | Tpeak (min) | Peak temp (°C) |
|---|---|---|---|---|---|
| 3 | A | 30 | 2.44 | 3.77 | 161 |
| 4 | A | 15 | 3.07 | 4.28 | 162 |
| 5 | A | 5 | 9.53 | 10.78 | 161 |
| 6 | A | 2 | 23.03 | 27.93 | 151 |
| 7 | B | 30 | 1.24 | 2.2 | 161 |
| 8 | B | 15 | 1.74 | 2.9 | 160 |
| 9 | B | 5 | 3.95 | 5.82 | 157 |
| 10 | B | 2 | 9.04 | 10.83 | 147 |

It should be noted that Perkadox 20S contains only 20% of benzoyl peroxide. The 2% 20S corresponds therefore to only 0.4% of actual peroxide. Consequently these experiments demonstrate that various amounts of peroxide can be used to cure the resin composition according to the invention.

### Example 11-15

To the formulation used in example 1 was added various amounts of water before the addition of 30% Perkadox 20S . The curing was monitored with the standard gel time equipment. The results are shown in Table 4.

**Table 4**

| | % water | T gel (min) | Tpeak (min) | Peak temp (°C) |
|---|---|---|---|---|
| 1 | 0 | 3.74 | 5.02 | 164 |
| 11 | 1 | 3.39 | 4.75 | 160 |
| 12 | 2 | 3.54 | 4.65 | 160 |
| 13 | 5 | 3.33 | 4.3 | 155 |
| 14 | 10 | 3.45 | 4.53 | 144 |
| 15 | 15 | 3.7 | 4.97 | 131 |

These experiments clearly demonstrate that the cure process employing the resin compositions according to the invention is relatively insensitive to amounts of water present.

### Example 16

100g of resin composition comprising resin A (prepared as described above) cooled to -5°C and 30g of Perkadox 20S cooled to -5°C were mixed and the reactivity at -5°C was determined with the standard gel time equipment. After 28.06 min a completely solidified mixture was obtained.

Combining example 3-10 (amount peroxide), example 11-15 (amount water) and example 16 (low temperature) it is clear that with the aromatic amines according to the invention a very robust thermosetting resin system can be obtained, i.e. that is able to give good curing at various temperatures including low temperatures.

This makes these resin systems very suitable for a wide variety of applications. One of the most demanding applications in terms of curing, mechanical properties and adhesive properties is the chemical anchoring application and therefore the resin systems according to the invention were tested in this application

### Example 17 and comparative experiments G-K

To a mixture of 200g resin composition (prepared as described above) comprising the resin as indicated in Table 5, to which Tempol was added (in amounts shown below) in order to obtain a good working time, was added 60 g Perkadox 20 S. After stirring for 1 minute, 3 steel anchors were set for the confined test. For each set of test (ref, F1 b and -5°C), a new formulation was prepared. 24 hrs after setting the anchors they were pulled out. The results are shown in Table 5 below (the values are an average of 3 measurements).

**Table 5**

| Example | | Resin present in the resin composition | Extra tempol (ppm) | Surface | Ref (kN) | F1b (kN) | Performance decrease ((ref-F1b)/ref *100%) | -5°C (kN) |
|---|---|---|---|---|---|---|---|---|
| 17 | DIPT | A | 750 | Tack free | 78.6 | 76.8 | 2.2 | 104.4 |
| | | | | | | | | |
| Comp G | DIPT | Comp C | 5000 | Wet | 88 | 67.6 | 23 | 104.5 |
| Comp H | DET | CompH | 2000 | Wet | 56.5 | 50.5 | 10.6 | 93.6 |
| Comp I | DET | CompG | 5000 | Wet | 79.5 | 62.9 | 20.8 | 101.9 |
| Comp J | DEA | CompE | 0 | Wet | 55.4 | 53.2 | 3.9 | 60.5 |
| Comp K | DEA | CompD | 2000 | Wet | 73.7 | 66.9 | 9.2 | 100.9 |

Firstly, Example 17 and the comparative experiments clearly demonstrate that a good curing resulting in a tack free surface can only be obtained with formulations according to the invention. When using free tertiary aromatic amines (comparative experiments G, I and K), wet surfaces were always obtained. Incorporating N,N-diethanol toluidine DET or N,N-diethanol aniline DEA into the resin (comparative experiment H and comparative experiment J), also resulted in a wet surface.

Furthermore in example 11-15 it has already been demonstrated that water does not substantially negatively influence the curing of formulations according to the invention. This is further exemplified by the small difference in performance between the dry, well cleaned reference drill hole and the wet, partly cleaned F1B drillhole of example 17. A value of 76.8 kN is found for the F1 b hole which means only a minimal decrease in performance of 2.2% compared to the dry hole. In all the comparative experiments (G-K) the load values for the F1 b holes were significantly lower, ranging from 68 to 51 kN and the difference between the dry and wet hole was bigger as indicated by the performance decrease.

Furthermore, comparing the performance at -5°C, is it is clear that looking at the difference between incorporated and free tertiary aromatic amine (example 17/ comp G (DIPT); comp H/I (DET); comp J/K (DEA)) that only with the structures according to the invention there is no significant drop in performance at -5°C.

Finally, comparing example 17 with comp H (DET) and comp J (DEA) with respect to the reference load values it is evident that the best performance, i.e. the highest pull out values being indicative of the best cured network, is obtained with a formulation according to the invention.

## Claims

1. Resin composition comprising (a) an unsaturated polyester resin and/or a methacrylate functional resin, **characterized in that** the resin composition further comprises (b) an aromatic amine according to formula 1 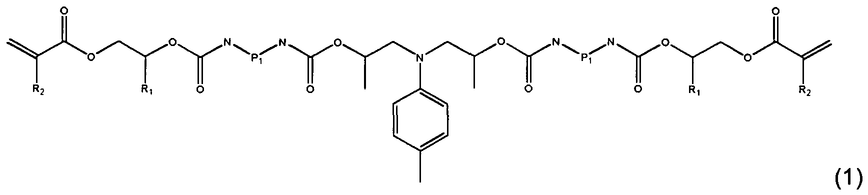 in which P₁ =an organic residue, R₁ =H or a C₁-C₆ alkyl, R₂= H or CH₃.

2. Resin composition according to claim 1, **characterized in that** the molecular weight Mₙ of the aromatic amine according to formula (1) is higher than 750 Dalton, whereby the molecular weight is determined in tetrahydrofuran using gel permeation chromatography according to ISO 13885-1 using polystyrene standards.

3. Resin composition according to claim 1 or 2, **characterized in that** the molecular weight Mₙ of the aromatic amine according to formula (1) is lower than 10000 Dalton, whereby the molecular weight is determined in tetrahydrofuran using gel permeation chromatography according to ISO 13885-1 using polystyrene standards.

4. Resin composition according to anyone of claims 1-3, **characterized in that** R₁= CH₃ and R₂= CH₃.

5. Resin composition according to anyone of claims 1-4, **characterized in that** P₁ is a residue of polymeric methylene diphenyl diisocyanate.

6. Resin composition according to anyone of claims 1-5, **characterized in that** the composition comprises a mixture of methacrylate functional resins which mixture has an average functionality higher than 1, preferably higher than 1.5 and more preferably higher than 1.7.

7. Resin composition according to anyone of claims 1-6, **characterized in that** the composition comprises a mixture of methacrylate functional resins which mixture has an average functionality lower than 4, more preferably lower than 3.

8. Resin composition according to anyone of claims 6-7, **characterized in that** the methacrylate functional resins further contain at least one urethane group.

9. Resin composition according to anyone of the preceding claims, **characterized in that** the resin composition comprises, as compound (a), a methacrylate functional resin according to formula (2) or a mixture of methacrylate functional resins according to formula (2) 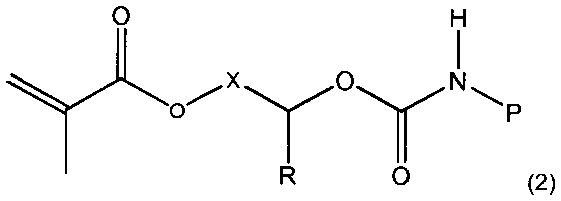 in which X= C1-C10 (cyclo)alkyl or C1-C30 alkoxy; R = H or a C1- C4 alkyl and P = a residue of an isocyanate.

10. Resin composition according to anyone of the preceding claims, **characterized in that** the resin composition further comprises a reactive diluent (c).

11. Resin composition according to anyone of the preceding claims, **characterized in that** the amount of the aromatic amine according to formula (1) (relative to the total amount of compounds (a), (b) and (c)) is from 1 up to and including 30 wt.%, more preferably from 2 up to and including 20 wt.%.

12. Two component resin system consisting of a first component A and a second component B, **characterized in that** component A comprises a resin composition according to anyone of claims 1-11 and component B comprises a peranhydride.

13. Process for radically curing a resin composition according to anyone of claims 1-11, **characterized in that** the curing is effected in the presence of a peranhydride.

14. Method for chemical anchoring of anchoring elements comprising
(1) anchoring an anchoring element to a borehole of any kind of substrate with a composition obtained by mixing the two components A and B from the two-component system according to claim 12, wherein at least one of component A and B comprises at least an inorganic filler (d); and
(2) allowing the composition to cure at ambient temperature, whereby the anchoring element is anchored to the surface.

15. Cured structural part obtained by mixing the resin composition according to anyone of claims 1-11 with a peranhydride or by mixing the two components A and B of the two component resin system according to claim 12.

16. Use of the cured structural part of claim 15 in anyone of the areas of automotive parts, boats, chemical anchoring, roofing, construction, containers, relining, pipes, tanks, flooring or windmill blades.

17. Aromatic amine according to formula (1) 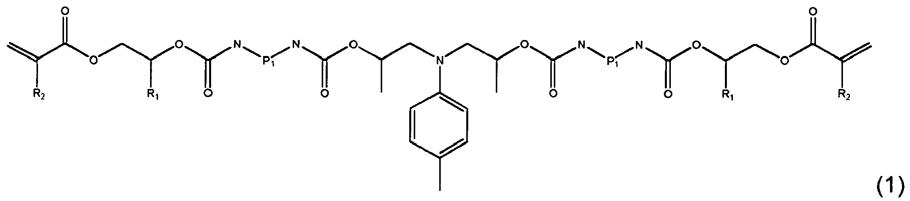 in which P₁ =an organic residue, R₁ =H or a C₁-C₆ alkyl, R₂= H or CH₃.

18. Aromatic amine according to claim 17, **characterized in that** R₁= CH₃ and R₂= CH₃ and P₁ is a residue of polymeric methylene diphenyl diisocyanate.

19. Process for preparing an aromatic amine according to formula 1 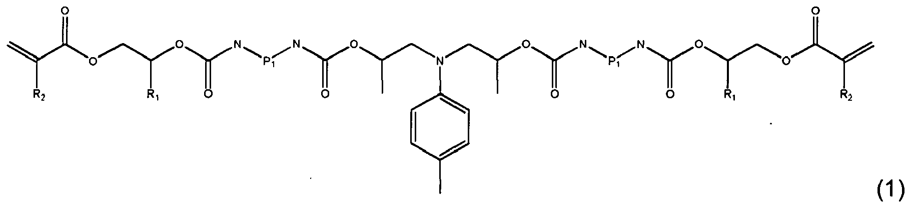 in which P₁ =an organic residue, R₁ =H or a C₁-C₆ alkyl, R₂= H or CH₃, wherein the process comprises reacting a polymeric isocyanate with a functionality of ≥2, a hydroxyfunctional (meth)acrylate and N,N-di-isopropanoltoluidine.

## Patentansprüche

1. Harzzusammensetzung, umfassend (a) ein ungesättigtes Polyesterharz und/oder ein methacrylatfunktionelles Harz, **dadurch gekennzeichnet, dass** die Harzzusammensetzung ferner (b) ein aromatisches Amin der Formel 1 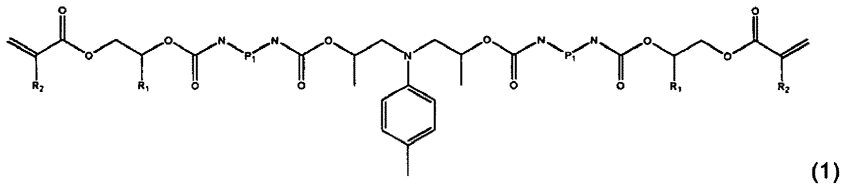 worin P₁ = ein organischer Rest, R₁ = H oder ein C₁-C₆-Alkyl, R₂ = H oder CH₃, umfasst.

2. Harzzusammensetzung nach Anspruch 1, **dadurch gekennzeichnet, dass** das Molekulargewicht Mₙ des aromatischen Amins der Formel (1) mehr als 750 Dalton beträgt, wobei das Molekulargewicht in Tetrahydrofuran mittels Gelpermeationschromatographie gemäß ISO 13885-1 unter Verwendung von Polystyrol-Standards bestimmt wird.

3. Harzzusammensetzung nach Anspruch 1 oder 2, **dadurch gekennzeichnet, dass** das Molekulargewicht Mₙ des aromatischen Amins der Formel (1) weniger als 10000 Dalton beträgt, wobei das Molekulargewicht in Tetrahydrofuran mittels Gelpermeationschromatographie gemäß ISO 13885-1 unter Verwendung von Polystyrol-Standards bestimmt wird.

4. Harzzusammensetzung nach einem der Ansprüche 1-3, **dadurch gekennzeichnet, dass** R₁ = CH₃ und R₂ = CH₃.

5. Harzzusammensetzung nach einem der Ansprüche 1-4, **dadurch gekennzeichnet, dass** P₁ für einen Rest von polymerem Methylendiphenyldiisocyanat steht.

6. Harzzusammensetzung nach einem der Ansprüche 1-5, **dadurch gekennzeichnet, dass** die Zusammensetzung ein Gemisch von methacrylatfunktionellen Harzen, das eine durchschnittliche Funktionalität von mehr als 1, vorzugsweise mehr als 1,5 und weiter bevorzugt mehr als 1,7 aufweist, umfasst.

7. Harzzusammensetzung nach einem der Ansprüche 1-6, **dadurch gekennzeichnet, dass** die Zusammensetzung ein Gemisch von methacrylatfunktionellen Harzen, das eine durchschnittliche Funktionalität von weniger als 4 und weiter bevorzugt weniger als 3 aufweist, umfasst.

8. Harzzusammensetzung nach einem der Ansprüche 6-7, **dadurch gekennzeichnet, dass** die methacrylatfunktionellen Harze ferner mindestens eine Urethangruppe enthalten.

9. Harzzusammensetzung nach einem der vorhergehenden Ansprüche, **dadurch gekennzeichnet, dass** die Harzzusammensetzung als Verbindung (a) ein meth-acrylatfunktionelles Harz der Formel (2) oder ein Gemisch von methacrylatfunktionellen Harzen der Formel (2) 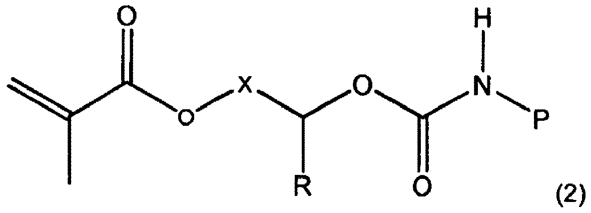 worin X = C1-C10-(Cyclo)alkyl oder C1-C30-Alkoxy; R = H oder ein C₁-C₄-Alkyl; und P = ein Rest eines Isocyanats, umfasst.

10. Harzzusammensetzung nach einem der vorhergehenden Ansprüche, **dadurch gekennzeichnet, dass** die Harzzusammensetzung ferner ein reaktives Verdünnungsmittel (c) umfasst.

11. Harzzusammensetzung nach einem der vorhergehenden Ansprüche, **dadurch gekennzeichnet, dass** die Menge des aromatischen Amins der Formel (1) (bezogen auf die Gesamtmenge der Verbindungen (a), (b) und (c)) 1 bis einschließlich 30 Gew.-% und weiter bevorzugt 2 bis einschließlich 20 Gew.-% beträgt.

12. Zweikomponentiges Harzsystem aus einer ersten Komponente A und einer zweiten Komponente B, **dadurch gekennzeichnet, dass** Komponente A eine Harzzusammensetzung nach einem der Ansprüche 1-11 umfasst und Komponente B ein Peranhydrid umfasst.

13. Verfahren zur radikalischen Härtung einer Harzzusammensetzung nach einem der Ansprüche 1-11, **dadurch gekennzeichnet, dass** die Härtung in Gegenwart eines Peranhydrids durchgeführt wird.

14. Verfahren zur chemischen Verankerung von Verankerungselementen, bei dem man
(1) ein Verankerungselement mit einer durch Mischen der beiden Komponenten A und B aus dem Zweikomponentensystem nach Anspruch 12 erhaltenen Zusammensetzung an einem Bohrloch einer beliebigen Art von Substrat verankert, wobei Komponente A und/oder Komponente B mindestens einen anorganischen Füllstoff (d) umfassen bzw. umfasst; und
(2) die Zusammensetzung bei Umgebungstemperatur härten lässt, wobei das Verankerungselement an der Oberfläche verankert wird.

15. Gehärtetes Konstruktionsteil, erhalten durch Mischen der Harzzusammensetzung nach einem der Ansprüche 1-11 mit einem Peranhydrid oder durch Mischen der beiden Komponenten A und B des zweikomponentigen Harzsystems nach Anspruch 12.

16. Verwendung des gehärteten Konstruktionsteils nach Anspruch 15 auf einem der Gebiete Autoteile, Boote, chemische Verankerung, Dachbau, Hochbau, Behälter, Nachfüttern, Rohre, Tanks, Bodenbeläge oder Windkraftwerksflügel.

17. Aromatisches Amin der Formel (1) 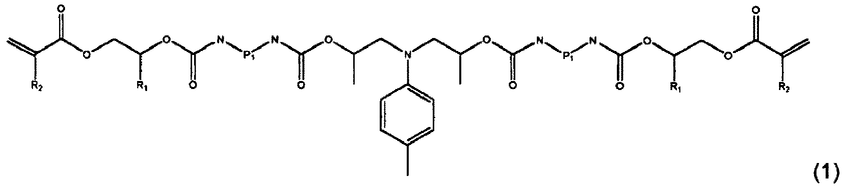 worin P₁ = ein organischer Rest, R₁ = H oder ein C₁-C₆-Alkyl, R₂ = H oder CH₃.

18. Aromatisches Amin nach Anspruch 17, **dadurch gekennzeichnet, dass** R₁ = CH₃ und R₂ = CH₃ und P₁ für einen Rest von polymerem Methylendiphenyldiisocyanat steht.

19. Verfahren zur Herstellung eines aromatischen Amins der Formel (1) 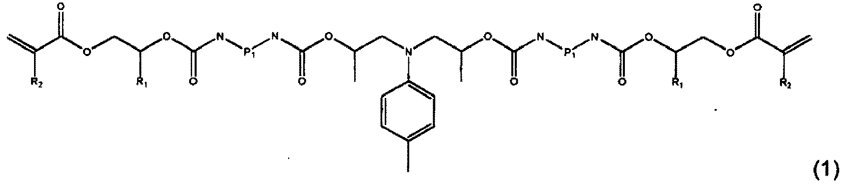 worin P₁ = ein organischer Rest, R₁ = H oder ein C₁-C₆-Alkyl, R₂ = H oder CH₃, bei dem man ein polymeres Isocyanat mit einer Funktionalität ≥ 2, ein hydroxyfunktionelles (Meth)acrylat und N,N-Diisopropanoltoluidin umsetzt.

## Revendications

1. Composition de résine comprenant (a) une résine de polyester insaturé et/ou une résine à fonctionnalité méthacrylate, **caractérisée en ce que** la composition de résine comprend en outre (b) une amine aromatique répondant à la formule 1 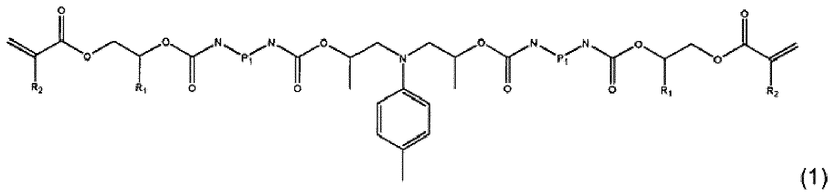 dans laquelle P₁ = un résidu organique, R₁ = H ou un alkyle en C₁-C₆, R₂ = H ou CH₃.

2. Composition de résine selon la revendication 1, **caractérisée en ce que** le poids moléculaire Mₙ de l'amine aromatique répondant à la formule (1) est supérieur à 750 daltons, le poids moléculaire étant déterminé dans du tétrahydrofurane en utilisant la chromatographie par perméation de gel conformément à l'ISO 13885-1 en utilisant des étalons de polystyrène.

3. Composition de résine selon la revendication 1 ou 2, **caractérisée en ce que** le poids moléculaire Mₙ de l'amine aromatique répondant à la formule (1) est inférieur à 10 000 daltons, le poids moléculaire étant déterminé dans du tétrahydrofurane en utilisant la chromatographie par perméation de gel conformément à l'ISO 13885-1 en utilisant des étalons de polystyrène.

4. Composition de résine selon l'une quelconque des revendications 1 à 3, **caractérisée en ce que** R₁ = CH₃ et R₂ = CH₃.

5. Composition de résine selon l'une quelconque des revendications 1 à 4, **caractérisée en ce que** P₁ est un résidu de diisocyanate de méthylènediphényle polymère.

6. Composition de résine selon l'une quelconque des revendications 1 à 5, **caractérisée en ce que** la composition comprend un mélange de résines à fonctionnalité méthacrylate, lequel mélange a une fonctionnalité moyenne supérieure à 1, de préférence supérieure à 1,5 et mieux encore supérieure à 1,7.

7. Composition de résine selon l'une quelconque des revendications 1 à 6, **caractérisée en ce que** la composition comprend un mélange de résines à fonctionnalité méthacrylate, lequel mélange a une fonctionnalité moyenne inférieure à 4, mieux inférieure à 3.

8. Composition de résine selon l'une quelconque des revendications 6 et 7, **caractérisée en ce que** les résines à fonctionnalité méthacrylate contiennent en outre au moins un groupe uréthane.

9. Composition de résine selon l'une quelconque des revendications précédentes, **caractérisée en ce que** la composition de résine comprend, comme composé (a), une résine à fonctionnalité méthacrylate répondant à la formule (2) ou un mélange de résines à fonctionnalité méthacrylate répondant à la formule (2) 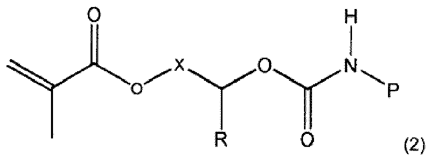 dans laquelle X = (cyclo)alkyle en C1-C10 ou alcoxy en C1-C30 ; R = H ou un alkyle en C1-C4 ; et P = un résidu d'un isocyanate.

10. Composition de résine selon l'une quelconque des revendications précédentes, **caractérisée en ce que** la composition de résine comprend en outre un diluant réactif (c).

11. Composition de résine selon l'une quelconque des revendications précédentes, **caractérisée en ce que** la quantité de l'amine aromatique répondant à la formule (1) (rapportée à la quantité totale des composés (a), (b) et (c)) va de 1 jusqu'à et y compris 30 % en poids, mieux de 2 jusqu'à et y compris 20 % en poids.

12. Système de résine bicomposant constitué d'un premier composant A et d'un deuxième composant B, **caractérisé en ce que** le composant A comprend une composition de résine selon l'une quelconque des revendications 1 à 11 et le composant B comprend un peranhydride.

13. Procédé de durcissement radicalaire d'une composition de résine selon l'une quelconque des revendications 1 à 11, **caractérisé en ce que** le durcissement est effectué en présence d'un peranhydride.

14. Procédé d'ancrage chimique d'éléments d'ancrage comprenant
(1) l'ancrage d'un élément d'ancrage à un alésage de n'importe quel type de substrat avec une composition obtenue en mélangeant les deux composants A et B du système bicomposant selon la revendication 12, au moins un des composants A et B comprenant au moins une charge inorganique (d) ; et
(2) le durcissement naturel de la composition à température ambiante, l'élément d'ancrage étant ainsi ancré à la surface.

15. Pièce structurale durcie obtenue en mélangeant la composition de résine selon l'une quelconque des revendications 1 à 11 avec un peranhydride ou en mélangeant les deux composants A et B du système de résine bicomposant selon la revendication 12.

16. Utilisation de la pièce structurale durcie de la revendication 15 dans l'un quelconque des domaines des pièces d'automobiles, des bateaux, de l'ancrage chimique, des couvertures de toit, de la construction, des récipients, du regarnissage, des tuyaux, des réservoirs, des revêtements de sol ou des pales d'éoliennes.

17. Amine aromatique répondant à la formule (1) 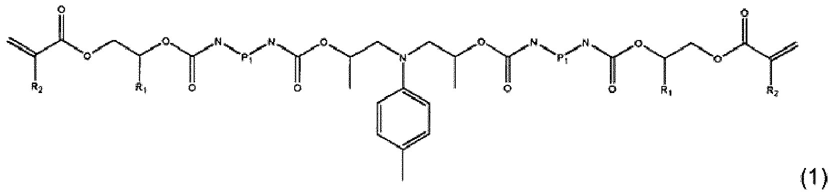 dans laquelle P₁ = un résidu organique, R₁ = H ou un alkyle en C₁-C₆, R₂ = H ou CH₃.

18. Amine aromatique selon la revendication 17, **caractérisée en ce que** R₁ = CH₃ et R₂ = CH₃ et P₁ est un résidu de diisocyanate de méthylènediphényle polymère.

19. Procédé de préparation d'une amine aromatique répondant à la formule 1 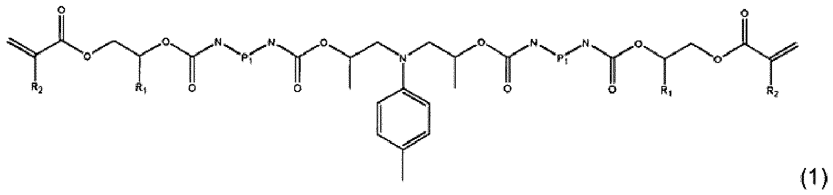 dans laquelle P₁ = un résidu organique, R₁ = H ou un alkyle en C₁-C₆, R₂ = H ou CH₃, le procédé comprenant la réaction d'un isocyanate polymère avec une fonctionnalité ≥ 2, d'un (méth)acrylate hydroxyfonctionnel et de N,N-di-isopropanoltoluidine.
